# EUROPEAN PATENT SPECIFICATION

(11) **EP 2 351 890 B1**
(45) Date of publication and mention of the grant of the patent: **03.06.2015**
(21) Application number: 11150710.9
(22) Date of filing: 12.01.2011
(51) Int. Cl.: E03C 1/32, E03D 11/14, F16B 33/00, F16B 37/00, F16B 37/08

(54) **An attachment nut and a method of its use**
Befestigungsmutter und Verfahren zu deren Verwendung
Écrou de fixation et son procédé d'utilisation

(30) Priority: 12.01.2010 SE 1050017
(43) Date of publication of application: 03.08.2011
(73) Proprietor: Ifö Sanitär AB, 295 22 Bromölla (SE)
(72) Inventor: Magnusson, Christian, 291 41 Kristianstad (SE); Danielsson Spogardh, Stefan, 374 53 Asarum (SE); Rusch, Christoph, 2502 Biel (CH)
(74) Representative: Ström & Gulliksson AB

(56) References cited:
- EP-A1- 0 997 096
- WO-A1-2009/005512
- DE-A1- 4 120 751

## Description

### Technical Field

The present invention relates to an attachment nut for use with sanitary ware, the nut being intended for cooperation with a screw and being provided with - preferably two - flexible jaws, which in a rest position enable an axial transfer of the attachment nut on the screw and internally are provided with threads, that correspond to the threads of the screw and extend in the axial direction of the screw according to the preamble of claim 1. It also relates to a method of its use. Document EP-A-997096 represents the closest Prior Art.

### Background of the Invention

It may be awkward and time-consuming to mount sanitary ware, such as a wash basin or a wall-hanged WC, to a wall or to mount together different sanitary ware members, such as a cistern and a bowl of a WC, to a usable unit.

A wash basin is conventionally mounted to a wall, in that the wash basin provided with through holes in its back side is pushed onto fixed screws in the wall. Washers and nuts are placed on the screws, and the nuts are tightened to the desired degree. Such a mounting is rather time-consuming and normally involves the activities of two persons: one holding the wash basin and one handling the nuts.

In certain cases sanitary wares, such as typically a cistern and a bowl for a WC, are delivered from the manufacturer separately for assembly at the end user. Also in such a case there is a need for a solution not requiring the tightening of conventional screw and nut joints.

The main object of the invention is to provide an attachment nut with advantages over a conventional nut with respect to ease and quickness of mounting in such exemplary cases as mentioned above.

### The Invention

An attachment nut fulfilling the above and other objects is according to the invention characterized in that
the jaws are arranged in an open interior of a nut portion of the attachment nut and are connected to a bottom wall of the nut portion each by means of a U-shaped connection strip for forming an integral attachment nut,
wherein each jaw is provided with an outer axial beveled surface in a way known per se for cooperation with a corresponding inner axial beveled surface in the nut portion, said beveled surfaces engaging when the nut at rotation meets an axial resistance, so that the jaws are brought into thread engagement with the screw.

The nut portion of the attachment nut preferably has a hexagonal shape in cross-section, so that it can be handled by a normal tool, such as a spanner.

The attachment nut preferably has a shaft portion, which extends axially from the nut portion and has an axial bore for the screw and an external end thread. The shaft portion is intended to be inserted in a corresponding hole in the sanitary ware, such as the wash basin. The attachment nut can then be held in place therein by a washer or the like attached to the end thread of the shaft portion.

A modified attachment nut for other uses instead has flexible legs, preferably provided with enlargements at their ends. These legs extend axially from the nut portion.

The invention also relates to a method of attaching a sanitary ware to a wall or the like or a first sanitary ware member to a second sanitary ware member, the wall or the first sanitary ware member being provided with fixed screws and the sanitary ware or the second sanitary ware member being provided with rotatable attachment nuts according to the invention. According to the invention, the attachment nuts of the sanitary ware or the second sanitary ware member are brought in axial engagement with the screws until contact between the sanitary ware and the wall or the between the second and the first sanitary ware members, respectively, whereupon the attachment nuts can be rotatably tightened on the screws to a desired degree.

### Brief Description of the Drawings

The invention will be described in further detail below under reference to the accompanying drawings, in which
Fig 1 is an isometric view of a wash basin to be mounted on a wall,
Fig 2 is a top view of a wash basin,
Fig 3 is a cross-sectional illustration of a wall, two wall screws and an attachment nut according to the invention on each of these screws,
Fig 4 is an enlargement from Fig 3,
Fig 5 is an end view of the attachment nut,
Fig 6 is an isometric view of the attachment nut,
Figs 7 and 8 are cross-sectional views of the attachment nut, perpendicularly to each other,
Figs 9 and 10 are cross-sectional views illustrating the mounting of a toilet cistern to a toilet bowl by means of attachment nuts according to the invention,
Fig 11 is an isometric view of different members in a construction for attaching e.g. a toilet bowl to a wall,
Fig 12 is an isometric view of the same members and the toilet bowl,
Fig 13 is an isometric view of the toilet bowl prior to its mounting to the wall,
Fig 14 is a cross-sectional side view of the toilet bowl prior to its mounting to the wall,
Fig 15 is an isometric view of a modified attachment nut,
Fig 16 illustrates the modified attachment nut mounted in the toilet bowl of a WC, and
Fig 17 shows the same WC with a mounted seat.

### Detailed Description

A wash basin 1 can be mounted to a wall by means of two wall screws 2, which extend through holes 3 in a back wall of the wash basin. Traditionally, a first person had to mount the wash basin to the wall screws, whereas a second one attached and tightened conventional nuts on the screws.

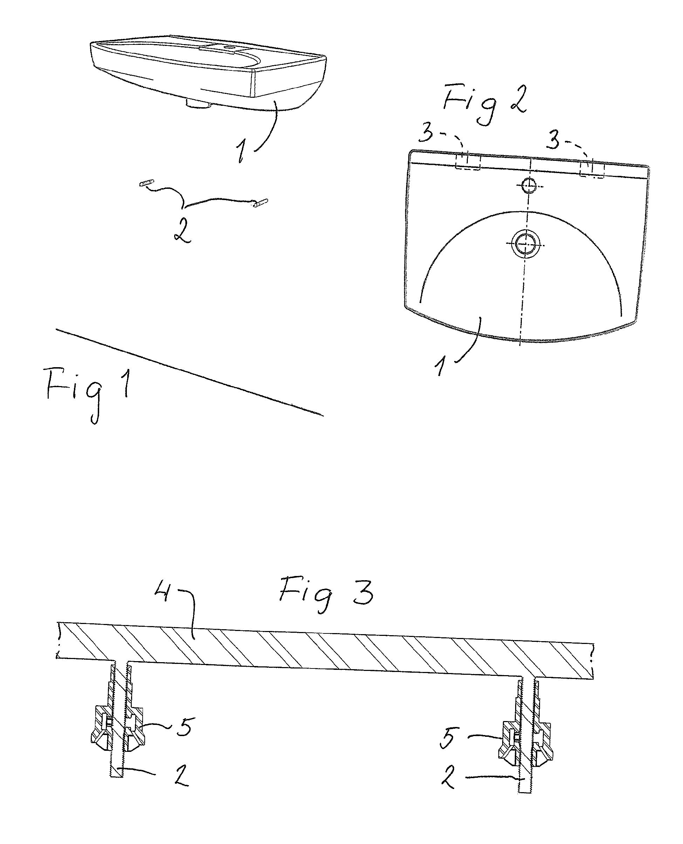

Fig 3 is a sectional illustration of a wall 4 with two wall screws 2. For illustration purposes, each of the screws 2 is here provided with an attachment nut 5 according to the invention.

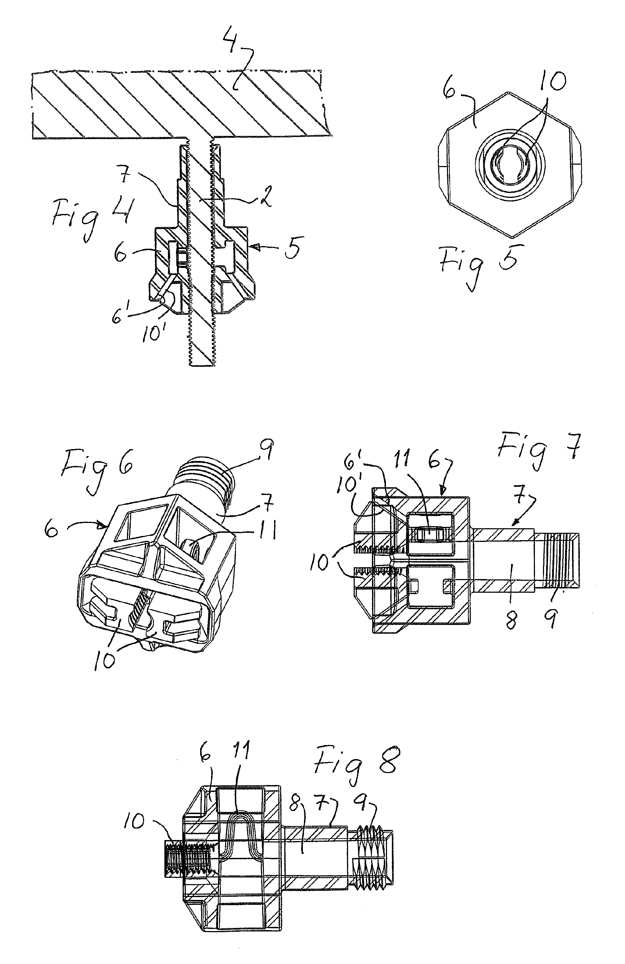

This attachment nut 5 is shown in Figs 4-8 (of which Fig 4 is an enlargement from Fig 3).

The attachment nut 5 is manufactured integrally or in one piece in plastic, preferably glassfiber-reinforced polyamid, by injection moulding, but other materials and/or manufacturing methods are conceivable. It comprises a nut portion 6 and a shaft portion 7. The nut portion 6 preferably has an outer hexagonal shape, as most clearly shown in Fig 5, for providing a tool grip for a spanner or similar tool. The preferably cylindrical shaft portion 7 has a slightly smaller outer diameter than the hole 3, in which it is to be inserted, and is provided with a bore 8 with a slightly larger inner diameter than the screw 2 to be inserted therethrough.

The shaft portion 7 is at its end provided with an external thread 9 or the like for the attachment of a washer (not shown) or the like for loosely holding the attachment nut 5 to a desired item, for example the wash basin 1, after having been introduced through the hole 3.

The nut portion 6 is formed as a cage and is internally provided with two jaws 10, axially in line with the shaft portion bore 8. Each of these jaws 10 is attached to the bottom of the cage at the transition to the shaft portion 7 by means of a U-shaped connection strip 11 so as to be flexible or movable to a certain extent in all directions.

Each of these jaws 10 has an inner surface formed with threads as a part of a nut for cooperation with the screw 2. In a rest position of the jaws 10, however, the attachment nut 5 can be axially transferred over the screw 2 with only slight engagement with the jaws 10. Differently speaking, the jaws 10 are free to snap over the thread of the screw 2.

As is best visible in Figs 4 and 7, each of the jaws 10 has an outer beveled surface 10' for cooperation with a corresponding inner beveled surface 6' in the nut portion 6.

When the attachment nut 5 has been axially moved onto the screw 2, a rotation of the attachment nut 5 in its tightening direction (normally in the clockwise direction as viewed from its end) will lead to a slightly increased bending of the connection strips 11, so that the beveled surfaces 6' and 10' will engage and accomplish a firm engagement of the jaws 10 with the screw 2. A further tightening of the attachment nut 5 (for example by means of a tool engaging the hexagonal nut portion 6) will tighten a joint like any screw and nut joint. It will be noted, that the engagement between the jaws 10 and the thread of the screw 2 will increase with increasing tightening torque.

The procedure is fully reversible, so that the joint may be loosened and the attachment nut 5 removed and reused, if desired.

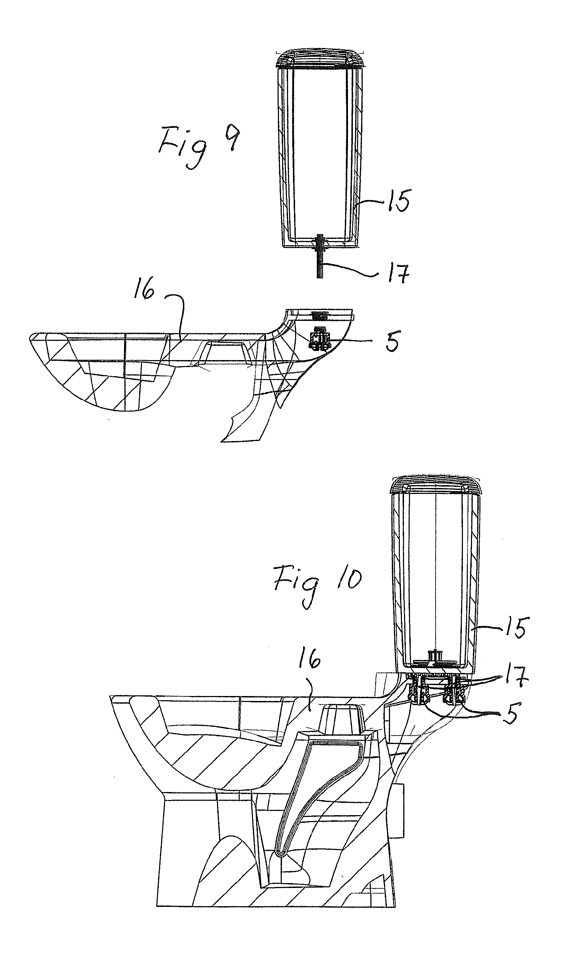

Figs 9 and 10 illustrate the use of attachment nuts 5 for the assembly of a cistern 15 to a bowl 16, together forming a WC. In certain cases the cistern and the bowl are not assembled until just prior to installation in place, and it is then of importance that the assembly is easy and quick to perform but provides a fully satisfactory result.

A conventional procedure is to provide the cistern 15 with two (Fig 9) or four (Fig 10) fixed screws 17 in its bottom. These screws 17 are brought through holes in the upper side of the bowl 16, and the assembly is performed by a washer and conventional nut. The assembly is time-consuming, and the result is not always satisfactory, as the human factor is at play.

A better and quicker solution is to provide the holes in the bowl 16 with attachment nuts 5 according to the invention. The screws 17 are brought through these attachment nuts 5, and the only manual action for finalizing the assembly is a quick tightening of the attachment nuts. If required, the attachment nuts 5 may be tightened after use for a certain time, and a demounting for some reason is also possible.

The solution shown in Fig 9 with two screws 17 is simple and cheap. The solution shown in Fig 10 with four screws 17 mounted on a separate plate in the bottom of the cistern 15, however, has the advantage that only one packing around the plate is needed.

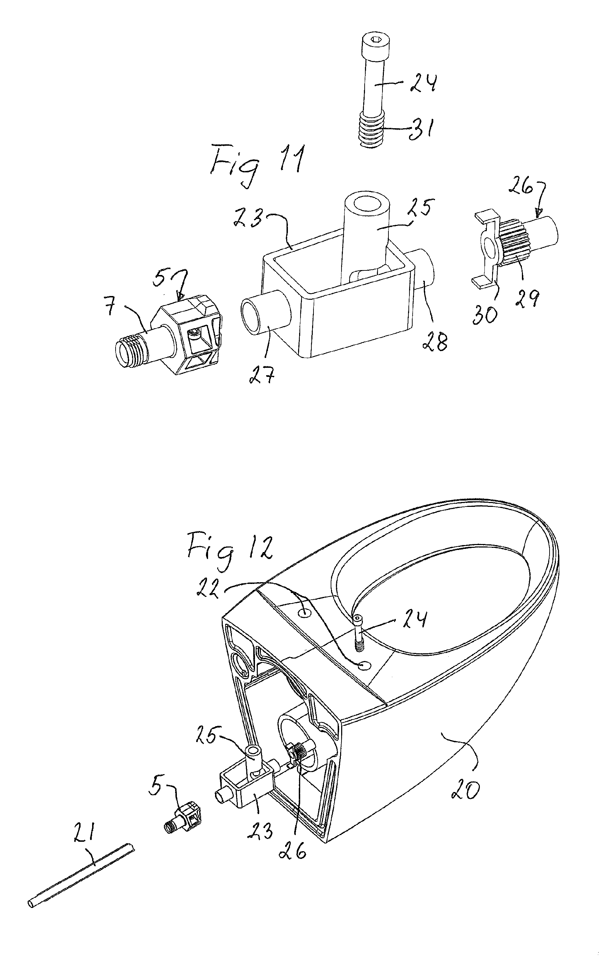

Wall-hanged toilet bowls are used to an increasing extent. For the mounting of such a bowl a solution making use of attachment nuts according to the invention can be contemplated, as is shown in Figs 11-14.

A toilet bowl 20 is to be attached to a wall by means of two (or possibly more) screws 21 fixed to the wall. There is an attachment arrangement (to be described) in the bowl 20 for cooperation with each of the screws 21; only one screw with attachment arrangement is shown.

A problem with the mounting of a bowl 20 to a wall screw 21 is the limited access to a nut within the bowl. In the present case the only access is through a hole 22 for seat fixation, opening in the upper surface of the bowl 20 and extending perpendicularly to the hole, through which the wall screw 21 is to be inserted. An attachment arrangement to be described, making use of an attachment nut 5 according to the invention, can be accessed through said hole 22.

The different members of this attachment arrangement are shown most clearly in Fig 11. Besides the attachment nut 5, they are a box 23, a spindle screw 24, a guide tube 25, and an operating member 26.

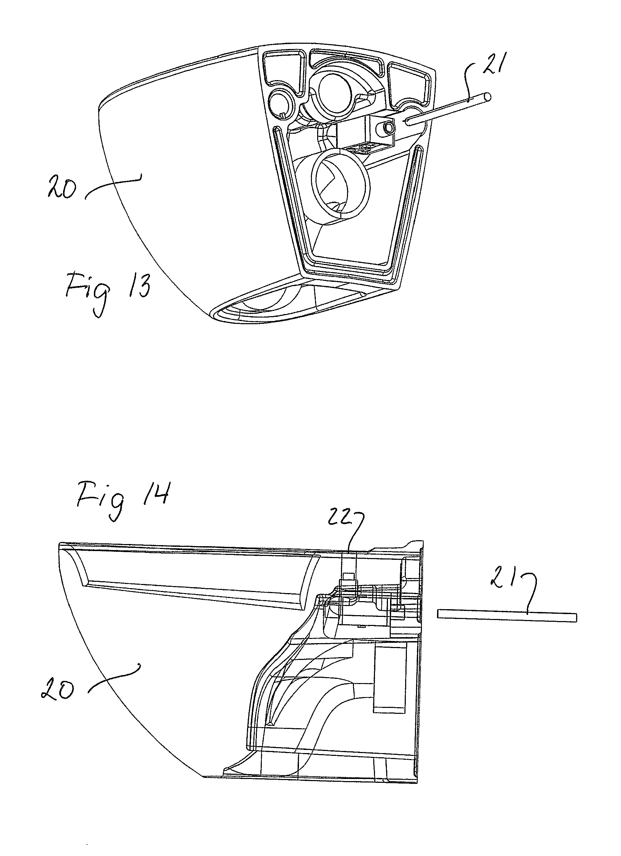

The box 23, preferably in the form of a frame, is at each of its ends provided with a guide bushing, 27, 28, each with a through cylindrical hole. The guide bushing 28 to the right in Fig 11 is intended for insertion into a corresponding hole in the interior of the bowl 20, and the box 23 is supported by an interior surface in the bowl 20, as most clearly appears in Fig 13.

The guide tube 25 is formed integrally with the box 23 and is to be inserted into the hole 22 . The operating member 26 is inserted with a cylindrical portion in the guide bushing 28 to the right in Fig 11 so as to be rotatable therein. The operating member 26 is provided with a gear 29 to extend into the guide tube 25 through an opening therein and with operating yokes 30 for cooperation with the attachment nut 5.

The spindle screw 24 is provided with a tool grip in a socket head at one of its ends and a spindle thread 31 for engagement with the gear 29 at its other end. The spindle thread 31 and the gear 29 form a worm gear. The spindle screw 24 is to be inserted in the hole 22 in the bowl 20 and further into the guide tube 25. By rotating the spindle screw 24, the operating member 26 is rotated.

The attachment nut 5 is placed in the box 23 in engagement with the operating yokes 30 of the operating member 26 and with its shaft portion 7 extending through the guide bushing 27 to the left in Fig 11.

The bowl 20 is mounted to the wall in the following manner: The bowl 20 is brought close to the wall, so that the fixed wall screws 21 enter through the attachment nuts 5. With the bowl 20 firmly against the wall, the attachment nuts 5 are tightened to the wall screws 21 by means of the spindle screws 24 accessible from the exterior of the bowl 20.

It is possible to use this worm gear arrangement with another attachment nut design.

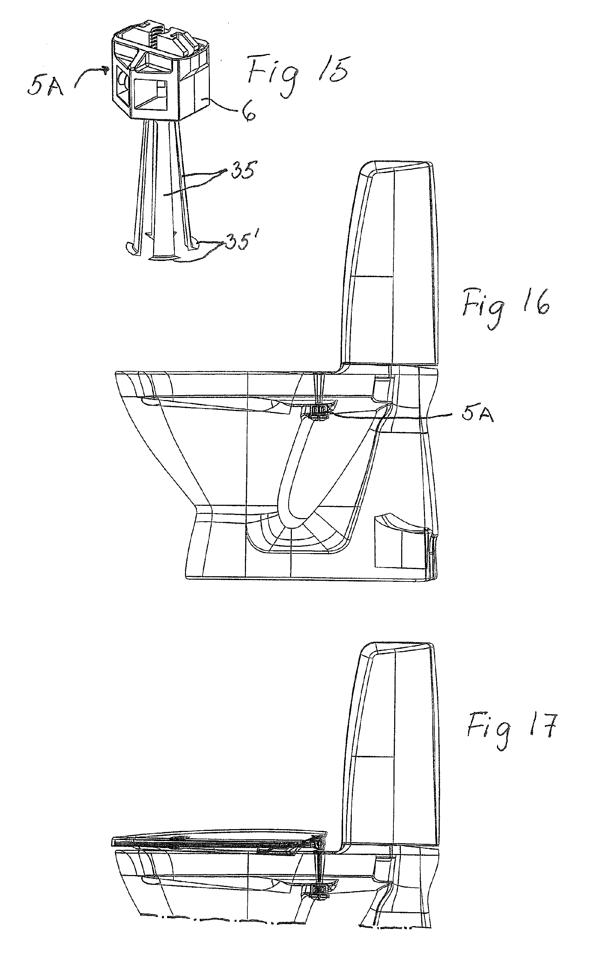

A modified attachment nut 5A according to the invention is shown in Fig 15. The nut portion 6 thereof has the same design and function as has been described above, especially with reference to Figs 3-8. The modification is that its shaft portion 7 is replaced by a number of - for example four - legs 35, which extend slightly outwards from their basis in the nut portion 6. Each leg 35 has an enlargement 35' at its end.

The modified attachment nut 5A is primarily intended for attachment of a WC seat, as is illustrated in Figs 16 and 17.

For the attachment of a seat arrangement, a WC bowl is typically provided with holes. A seat arrangement may be provided with threaded rods, which conventionally after mounting in the holes are manually provided with washers and nuts at the lower side of the bowl edge.

As a more convenient alternative, shown in Fig 16, a modified attachment nut 5A may be mounted from below in each such hole with its legs 35 extending up therethrough and with its enlargements 35' forming an anchoring means at the upper part of the hole. The seat rods may thereafter simply be pushed down through the attachment nuts 5A for establishing the necessary attachment or fixation. It is possible to tighten the attachment somewhat by rotating the attachment nuts 5A, as the legs have a certain flexibility.

Threaded rods are predominantly used for a hard seat, which normally may be detached from the rods for cleaning. If the threaded rods, however, are to be dismounted, the attachment nut 5A has to be clamped inwardly, so that its legs are inside the hole and the nut can be loosened by rotation. Alternatively, the rods may be dismounted by rotation from the nut 5A, provided that the seat has been removed.

Fig 17 shows the arrangement with a mounted seat.

The modified attachment nut 5A may have other uses for sanitary ware.

Modifications are possible within the scope of the appended claims. It can for example be possible to have more than two jaws 10, and the nut portion 6 forming a cage may have a different practical design. Further, the operating member 26 and the attachment nut 5 may be one part with both functionalities integrated. Also, the attachment nut according to the invention can be used for other areas than sanitary ware.

## Claims

1. An attachment nut (5; 5A) for use with sanitary ware, the nut being intended for cooperation with a screw (2, 17) and being provided with - preferably two
- flexible jaws (10), which in a rest position enable an axial transfer of the attachment nut on the screw and internally are provided with threads, for cooperation with the threads of the screw and extend in the axial direction of the screw,
wherein jaws (10) are arranged in an open interior of a nut portion (6) of the attachment nut, and
wherein each jaw (10) is provided with an outer axial beveled surface (10') for cooperation with a corresponding inner axial beveled surface (6') in the nut portion, said beveled surfaces engaging when the nut at rotation meets an axial resistance, so that the jaws are brought into thread engagement with the screw; **characterised in that** the jaws are connected to a bottom wall of the nut portion each by means of a U-shaped connection strip (11) for forming an integral attachment nut.

2. An attachment nut according to claim 1, wherein the nut portion (6) has a hexagonal shape in cross-section.

3. An attachment nut according to claim 1, wherein a shaft portion (7) extends axially from the nut portion (6), the shaft portion having an axial bore (8) for the screw (2, 17) and an external end thread (9).

4. An attachment nut according to claim 1, wherein flexible legs (35), preferably provided with enlargements (35') at their ends, extend axially from the nut portion (6).

5. A method of attaching a sanitary ware (1, 20) to a wall or the like or a first sanitary ware member (15) to a second sanitary ware member (16), the wall or the first sanitary ware member (15) being provided with fixed screws (2, 17) and the sanitary ware (1, 20) or the second sanitary ware member (16) being provided with rotatable attachment nuts (5; 5A) according to any of claims 1-5, whereby the attachment nuts (5; 5A) of the sanitary ware or the second sanitary ware member (16) are brought in axial engagement with the screws (2, 17) until contact between the sanitary ware and the wall or the between the second and the first sanitary ware members, respectively, whereupon the attachment nuts (5) can be rotatably tightened on the screws to a desired degree.

## Patentansprüche

1. Befestigungsmutter (5; 5A) zur Verwendung mit Sanitärausstattung, wobei die Mutter zum Zusammenwirken mit einer Schraube (2, 17) vorgesehen ist und mit, bevorzugt zwei, flexiblen Backen (10) versehen ist, die in einer Ruheposition eine axiale Verlagerung der Befestigungsmutter an der Schraube ermöglichen und intern mit Windungen zum Zusammenwirken mit den Windungen der Schraube versehen sind und sich in der axialen Richtung der Schraube erstrecken,
wobei die Backen (10) in einem offenen Innenraum eines Mutterabschnitts (6) der Befestigungsmutter angeordnet sind, und
wobei jede Backe (10) mit einer äußeren axialen abgeschrägten Oberfläche (10') zum Zusammenwirken mit einer entsprechenden inneren axialen abgeschrägten Oberfläche (6') in dem Mutterabschnitt versehen ist, wobei die abgeschrägten Oberflächen ineinandergreifen, wenn die Mutter bei einer Drehung auf einen axialen Widerstand stößt, so dass die Backen in Gewindeeingriff mit der Schraube gebracht werden;
**dadurch gekennzeichnet, dass** die Backen jeweils mittels eines U-förmigen Verbindungsstegs (11) mit einer unteren Wand des Mutterabschnitts verbunden sind, um eine einstückige Befestigungsmutter auszubilden.

2. Befestigungsmutter nach Anspruch 1, wobei der Mutterabschnitt (6) im Querschnitt eine sechseckige Form aufweist.

3. Befestigungsmutter nach Anspruch 1, wobei sich ein Schaftabschnitt (7) axial von dem Mutterabschnitt (6) aus erstreckt, wobei der Schaftabschnitt eine axiale Bohrung (8) für die Schraube (2, 17) und ein externes Endgewinde (9) aufweist.

4. Befestigungsmutter nach Anspruch 1, wobei sich flexible Schenkel (35), die an ihren Enden bevorzugt mit Verdickungen (35') versehen sind, axial von dem Mutterabschnitt (6) aus erstrecken.

5. Verfahren zum Befestigen einer Sanitärausstattung (1, 20) an einer Wand oder dergleichen oder eines ersten Sanitärausstattungselements (15) an einem zweiten Sanitärausstattungselement (16), wobei die Wand oder das erste Sanitärausstattungselement (15) mit feststehenden Schrauben (2, 17) versehen ist und die Sanitärausstattung (1, 20) oder das zweite Sanitärausstattungselement (16) mit drehbaren Befestigungsmuttern (5; 5A) nach einem der Ansprüche 1-5 versehen ist, wodurch die Befestigungsmuttern (5; 5A) der Sanitärausstattung oder des zweiten Sanitärausstattungselements (16) in axialen Eingriff mit den Schrauben (2, 17) gebracht werden, bis zum Kontakt zwischen der Sanitärausstattung und der Wand bzw. zwischen dem zweiten und dem ersten Sanitärausstattungselement, woraufhin die Befestigungsmuttern (5) in einem gewünschten Maß durch Drehen an den Schrauben festgezogen werden können.

## Revendications

1. Écrou de fixation (5 ; 5A) pour une utilisation avec un article sanitaire, l'écrou étant destiné à coopérer avec une vis (2, 17) et étant pourvu de - de préférence deux- mâchoires flexibles (10), qui, dans une position de repos, permettent un transfert axial de l'écrou de fixation sur la vis et, à l'intérieur, sont pourvues de filetages pour coopérer avec les filetages de la vis et s'étendent dans la direction axiale de la vis,
dans lequel les mâchoires (10) sont agencées dans une partie intérieure ouverte d'une partie d'écrou (6) de l'écrou de fixation, et
dans lequel chaque mâchoire (10) est pourvue d'une surface biseautée axiale externe (10') pour coopérer avec une surface biseautée axiale interne correspondante (6') dans la partie d'écrou, lesdites surfaces biseautées s'engageant lorsque l'écrou, lors d'une rotation, rencontre une résistance axiale, de sorte que les mâchoires soient amenées en engagement par filetage avec la vis ;
**caractérisé en ce que** chacune des mâchoires est reliée à une paroi inférieure de la partie d'écrou au moyen d'une bande de liaison en forme de U (11) pour former un écrou de fixation monobloc.

2. Écrou de fixation selon la revendication 1, dans lequel la partie d'écrou (6) a une forme hexagonale en coupe transversale.

3. Écrou de fixation selon la revendication 1, dans lequel une partie d'arbre (7) s'étend axialement à partir de la partie d'écrou (6), la partie d'arbre ayant un alésage axial (8) pour la vis (2, 17) et un filetage d'extrémité externe (9).

4. Écrou de fixation selon la revendication 1, dans lequel des jambes flexibles (35), de préférence pourvues d'élargissements (35') au niveau de leurs extrémités, s'étendent axialement à partir de la partie d'écrou (6).

5. Procédé de fixation d'un article sanitaire (1, 20) à une paroi ou autres analogues ou d'un premier élément d'article sanitaire (15) à un deuxième élément d'article sanitaire (16), la paroi ou le premier élément d'article sanitaire (15) étant pourvu (e) de vis fixes (2, 17) et l'article sanitaire (1, 20) ou le deuxième élément d'article sanitaire (16) étant pourvu d' écrous de fixation rotatifs (5 ; 5A) selon l'une des revendications 1 à 5, moyennant quoi des écrous de fixation (5 ; 5A) de l'article sanitaire ou du deuxième élément d'article sanitaire (16) sont amenés en engagement axial avec les vis (2, 17) jusqu'à établissement d'un contact entre l'article sanitaire et la paroi ou entre les deuxième et premier éléments d'article sanitaire, respectivement, après quoi les écrous de fixation (5) peuvent être serrés en rotation sur les vis à un degré souhaité.
